# EUROPEAN PATENT SPECIFICATION

(11) **EP 3 986 697 B1**
(45) Date of publication and mention of the grant of the patent: **04.06.2025**
(21) Application number: 20743886.2
(22) Date of filing: 12.06.2020
(51) Int. Cl.: B29C 64/118, B29C 64/393, B29C 64/153, B29C 64/282, B29C 64/264

(54) **APPARATUS AND METHOD FOR PRODUCING AN OBJECT BY MEANS OF ADDITIVE MANUFACTURING**
VORRICHTUNG UND VERFAHREN ZUR HERSTELLUNG EINES OBJEKTS MITTELS GENERATIVER FERTIGUNG
APPAREIL ET PROCÉDÉ POUR LA PRODUCTION D'UN OBJET AU MOYEN D'UNE FABRICATION ADDITIVE

(30) Priority: 18.06.2019 NL 2023337
(43) Date of publication of application: 27.04.2022
(73) Proprietor: Additive Industries B.V., 5600 GA Eindhoven (NL)
(72) Inventor: WIJN, Erwin, 5600 GA EINDHOVEN (NL); VAES, Mark Herman Else, 5600 GA EINDHOVEN (NL)
(74) Representative: Algemeen Octrooi- en Merkenbureau B.V.
(86) International application number: PCT/NL2020/050379
(87) International publication number: WO 2020/256540

(56) References cited:
- WO-A1-2009/053100
- WO-A1-2018/064066
- WO-A1-2019/094280

## Description

According to a first aspect the present disclosure relates to an apparatus for manufacturing an object by means of additive manufacturing.

The present disclosure relates according to a second aspect to a method for producing an object by means of additive manufacturing using an apparatus.

3D printing or additive manufacturing refers to any of various processes for manufacturing a three-dimensional object in which material is joined or solidified under computer control to create a three-dimensional object, with material being added together, typically layer by layer.

A known apparatus for printing a three-dimensional object comprises:
- a process chamber for receiving a bath of powdered material which can be solidified by exposure to electromagnetic radiation;
- a support for positioning a part of said object in relation to a surface level of said bath of powdered material;
- a solidifying device arranged for emitting a beam of electromagnetic radiation on said surface level for solidifying a selective part of a layer of powdered material of said bath of powdered material. WO2019/094280 A1 discloses an apparatus and a method according to the preamble of the appended claims 1 and 8.

One of the challenges is how to realize an object using an apparatus for printing three-dimensional objects having a relative high product quality.

It is an object of the present disclosure to provide an apparatus and a method for producing an object, by additive manufacturing, that allows to manufacture objects having a relative high product quality.

This objective is achieved by the apparatus according to the appended claim 1 and a method according to the appended claim 8.

By providing the control device a relative high product quality may be realized. Controlling the energy density allows to realize a manufacturing process that is relative stable as regards solidification of the powdered material. The present disclosure relies at least partly on the insight that a relative large variation of energy density during manufacturing of an object may result in a relative low product quality. The relative low product quality may be due to variations of the solidification process of the powdered material for manufacturing the object. A relative low energy density may for instance result in inclusions of powdered material in the object. Alternatively a relative high energy density may result in evaporation and/or ablation of powdered material thereby affecting the quality of the object. Moreover, relative small variations of energy density may result in variations of mechanical characteristics of the solidified powdered material due to temperature differences during the solidification and the subsequent cooling of the powdered material.

The present disclosure relies further at least partly on the insight that characteristics of the beam of electromagnetic radiation may be different for different positions at said surface level. The control device comprised by the apparatus according to the present is arranged for taking into account the position of the beam of electromagnetic radiation at the surface level for controlling the energy density of the electromagnetic radiation. A dimension of the beam of electromagnetic radiation, being a characteristic of the beam of electromagnetic radiation, may vary along the surface level for instance due to the optics provided between the solidifying device and the surface level for shaping and displacing said beam of electromagnetic radiation along said surface level.

In particular, when using a scanning mirror device for deflecting the beam of electromagnetic radiation along the surface level, a dimension of the beam of electromagnetic radiation may vary due to a change of an angle of incidence of the beam of electromagnetic radiation on the surface level due to movement of said beam of electromagnetic radiation along the surface level.

Moreover, by changing the position of the beam of electromagnetic radiation along the surface level, the optical path of the beam of electromagnetic radiation may differ thereby resulting in a difference between a focal plane of the beam of electromagnetic radiation and the surface level. A correction of a difference between the focal plane of the beam of electromagnetic radiation and the surface level may contribute to a variation of a dimension of the beam of electromagnetic radiation.

A further advantage of the apparatus according to the first aspect is that by providing the control device a feed-forward compensation may be realized for controlling the energy density of the electromagnetic radiation, during solidification of said selective part of said powdered material, taking into account a position of said beam of electromagnetic radiation at said surface level.

The control device may comprise a lookup table provided with settings related to a position of said beam of electromagnetic radiation along said surface level for controlling said energy density of said beam of electromagnetic radiation along said surface level.

In this regard, according to the appended claims, said control device is arranged for controlling said energy density of said electromagnetic radiation at said surface level taking into account said position of said beam of electromagnetic radiation at said surface level.

Within the context of the present disclosure, the energy density may be defined in terms of the power of the beam of electromagnetic radiation, a surface area or diameter of the beam of electromagnetic radiation at the surface level, a movement speed of the beam of electromagnetic radiation at the surface level and a hatch distance of the beam of electromagnetic radiation at the surface level, wherein the hatch distance is a distance between neighbouring scan lines of the beam of electromagnetic radiation at the surface level. The energy density is expressed in terms of Joule/cm².

Controlling the energy density of the electromagnetic radiation at the surface level is beneficial for realizing a relative large power input of electromagnetic radiation in said powdered material while realizing a relative high product quality. It is noted that a relative high energy density at the surface level may result in evaporation and/or ablation of powdered material at the surface level, whereas a relative low energy density may result in a relative slow manufacturing process or may result in inclusions of powdered material in the object.

The energy density of the electromagnetic radiation at the surface level is maintained within a predetermined range. The predetermined range may take into account the material characteristic such as for instance particle size and/or the type of metal of the powdered material. This is beneficial for realizing a relative high product quality while allowing a relative short time for manufacturing the object.

It is advantageous if said control device is arranged for controlling said energy density of said beam of electromagnetic radiation at said surface level by controlling a dimension of said beam of electromagnetic radiation at said surface level and a power of said beam of electromagnetic radiation at said surface level. Controlling a dimension of said beam of electromagnetic material may involve changing a dimension of said beam of electromagnetic radiation.

According to the appended claims, said control device is arranged for controlling an energy density of said electromagnetic radiation at said surface level, by controlling a dimension of said beam of electromagnetic radiation at said surface level, during solidification of said selective part of said layer of said powdered material of said bath of powdered material, taking into account a position of said beam of electromagnetic radiation at said surface level such that at a constant power of said beam of electromagnetic radiation said energy density of said electromagnetic radiation at said surface level (L) is maintained within a range of 10%, 5%, 3% or 1% of a nominal energy density, along said surface level. This is beneficial for realizing a relative high product quality.

Preferably, said control device is arranged for maintaining said energy density at said surface level along said surface level within a range of 10 % of a nominal energy density at said surface level.

Within the context of the present disclosure a nominal energy density may be understood as a predetermined set energy density. A nominal energy density at said surface level is therefore to be understood as a predetermined set energy density at said surface level.

Preferably, said control device is arranged for maintaining said energy density at said surface level along said surface level within a range of 5 % of a nominal energy density at said surface level.

Preferably, said control device is arranged for maintaining said energy density at said surface level along said surface level within a range of 3 % of a nominal energy density at said surface level.

Preferably, said control device is arranged for maintaining said energy density at said surface level along said surface level within a range of 1 % of a nominal energy density at said surface level.

It is beneficial if said control device is arranged for maintaining said energy density at said surface level constant along said surface level.

Said control device is arranged for controlling said energy density of said electromagnetic radiation in a volume of said bath of powdered material taking into account said position of said beam of electromagnetic radiation at said surface level, preferably wherein said energy density at any position in said volume is larger than zero.

Preferably, said control device is arranged for controlling said energy density of said electromagnetic radiation in a volume of said bath of powdered material, by controlling said dimension of said beam of electromagnetic radiation, taking into account said position of said beam of electromagnetic radiation at said surface level such that at said constant output power of said beam of electromagnetic radiation said energy density in said volume of said bath of powdered material of said electromagnetic radiation is maintained within a range of 10%, 5%, 3% or 1%, along said surface level, wherein said energy density at any position in said volume is larger than zero. This is beneficial for realizing a relative high product quality.

The energy density of the electromagnetic radiation in a volume of said bath of powdered material may also be referred to as volumetric energy density. The volumetric energy density may be defined in terms of the power of the beam of electromagnetic radiation, a layer thickness of said powdered material, a movement speed of said beam of electromagnetic radiation along the surface level and a hatch distance of the beam of electromagnetic radiation at the surface level, wherein the hatch distance is a distance between neighbouring scan lines of the beam of electromagnetic radiation at the surface level. The volumetric energy density is expressed in terms of Joule/cm³.

It is noted that due to absorption of the electromagnetic radiation, by the powdered material, and/or the caustic of the beam of electromagnetic radiation the volumetric energy density may vary in said volume of said bath of powdered material. In this regard, the volumetric energy density may be defined as an average energy density of said electromagnetic radiation in the volume of the bath of material, wherein said energy density in any position of said volume is larger than zero.

Within the context of the present disclosure, said volume of said bath of powdered material is to be understood as a part of said bath of powdered material wherein said energy density is larger than zero.

Preferably, the average energy density of the electromagnetic radiation in the volume of the bath of material is maintained within a predetermined range. The predetermined range preferably takes into account the material characteristic such as for instance particle size and/or the type of metal of the powdered material. This is beneficial for realizing a relative high product quality while allowing a relative short time for manufacturing the object.

In this regard, it is beneficial if said control device is arranged for controlling said energy density of said beam of electromagnetic radiation in said volume of said bath of powdered material by controlling:
- a dimension (d1,d2) of said beam of electromagnetic radiation at said surface level and at least one of:
- a power of said beam of electromagnetic radiation at said surface level;
- a thickness of said layer of said powdered material of said bath of powdered material; and
- a speed of moving said beam of electromagnetic radiation along said surface level.

In an embodiment of the apparatus according to the first aspect of the present disclosure, said control device is arranged for changing said dimension of said beam of electromagnetic radiation at said surface level by controlling at least one of:
- a focus setting of said beam of electromagnetic radiation;
- a beam shape of said beam of electromagnetic radiation;
- an expansion of said beam of electromagnetic radiation.

Preferably, said control device is arranged for controlling said power of said beam of electromagnetic radiation at said surface level by controlling at least one of:
- a duty cycle of said solidifying device;
- an output power of said solidifying device.

It is advantageous if said control device is further arranged for controlling a hatch distance at said surface level of said beam of electromagnetic radiation taking into account said dimension of said beam of electromagnetic radiation.

Preferably, the control device is communicatively coupled to said solidifying device.

Preferably, the apparatus according to the first aspect of the present disclosure comprises a beam shaping device for changing a focus setting and/or a beam shape of said beam of electromagnetic radiation, wherein said control device is communicatively coupled to said beam device for changing, by said control device, said focus setting and/or said beam shape of said beam of electromagnetic radiation.

In a practical embodiment of the apparatus according to the first aspect the control device is arranged for controlling said energy density of said electromagnetic radiation at said surface level taking into account said position of said beam of electromagnetic radiation at said surface level and for controlling said energy density of said electromagnetic radiation in said volume of said bath of powdered material taking into account said position of said beam of electromagnetic radiation at said surface level, wherein said energy density at any position in said volume is larger than zero.

Controlling both the energy density at said surface level and the volumetric energy density allows for realizing a relative large energy input in the layer of powdered material while realizing a relative high product quality. The present disclosure relies at least partly on the insight that both the energy density at said surface level and the volumetric energy density may be controlled separately, preferably by a single control device, and are preferably both controlled within a predetermined range.

According to the second aspect, the present disclosure relates to a method for producing an object by means of additive manufacturing according to the appended claim 8.

Embodiments of the method according to the second aspect correspond to embodiments of the apparatus according to the first aspect of the present disclosure. The advantages of the method according to the second aspect correspond to advantages of the apparatus according to first aspect of the present disclosure presented previously.

Preferably, during said step of controlling, by said control device, said energy density of said beam of electromagnetic radiation at said surface level is controlled by controlling a dimension of said beam of electromagnetic radiation at said surface level, taking into account a position of said beam of electromagnetic radiation at said surface level such that at a constant output power of said beam of electromagnetic radiation said energy density of said electromagnetic radiation at said surface level is maintained within a range of 10%, 5%, 3% or 1%, along said surface level. This is beneficial for realizing a relative high product quality.

In this regard, it is beneficial if said control device is arranged for controlling said energy density of said beam of electromagnetic radiation at said surface level by changing a dimension of said beam of electromagnetic radiation at said surface level and/or a power of said beam of electromagnetic radiation at said surface level and wherein during said step of controlling, said control device changes at least one of said dimension of said beam of electromagnetic radiation at said surface level and said power of said beam of electromagnetic radiation at said surface.

Preferably, said control device is arranged for maintaining said energy density at said surface level along said surface level within a range of 10 % of a nominal energy density at said surface level and wherein, during said step of controlling, said control device maintains said energy density at said surface level along said surface level within a range of 10 % of a nominal energy density at said surface level.

Preferably, said control device is arranged for maintaining said energy density at said surface level along said surface level within a range of 5 % of a nominal energy density at said surface level and wherein, during said step of controlling, said control device maintains said energy density at said surface level along said surface level within a range of 5 % of a nominal energy density at said surface level.

Preferably, said control device is arranged for maintaining said energy density at said surface level along said surface level within a range of 3 % of a nominal energy density at said surface level and wherein, during said step of controlling, said control device maintains said energy density at said surface level along said surface level within a range of 3 % of a nominal energy density at said surface level.

Preferably, said control device is arranged for maintaining said energy density at said surface level along said surface level within a range of 1 % of a nominal energy density at said surface level and wherein, during said step of controlling, said control device maintains said energy density at said surface level along said surface level within a range of 1 % of a nominal energy density at said surface level.

Preferably, said control device is arranged for controlling said energy density of said electromagnetic radiation in a volume of said bath of powdered material taking into account said position of said beam of electromagnetic radiation at said surface level, wherein said energy density at any position in said volume is larger than zero and wherein during said step of controlling said control device is controlling said energy density of said electromagnetic radiation in said volume of said bath of powdered material taking into account said position of said beam of electromagnetic radiation at said surface level.

Preferably, said control device is arranged for controlling said energy density of said electromagnetic radiation in a volume of said bath of powdered material, by controlling said dimension of said beam of electromagnetic radiation, taking into account said position of said beam of electromagnetic radiation at said surface level such that at said constant output power of said beam of electromagnetic radiation said energy density in said volume of said bath of powdered material of said electromagnetic radiation is maintained substantially constant along said surface level, wherein said energy density at any position in said volume is larger than zero, and wherein during said step of controlling said control device is controlling said energy density of said electromagnetic radiation in said volume of said bath of powdered material, by controlling said dimension of said beam of electromagnetic radiation, taking into account said position of said beam of electromagnetic radiation at said surface level such that at said constant output power of said beam of electromagnetic radiation said energy density in said volume of said bath of powdered material of said electromagnetic radiation is maintained substantially constant, preferably constant, more preferably within a range of 10%, 5%, 3% or 1%, along said surface level. This is beneficial for realizing a relative high product quality.

In this regard, it is beneficial if said control device is arranged for controlling said energy density of said beam of electromagnetic radiation in said volume of said bath of powdered material by controlling at least one of:
- a dimension of said beam of electromagnetic radiation at said surface level;
- a power of said beam of electromagnetic radiation at said surface level;
- a thickness of said layer of said powdered material; and
- a speed of moving said beam of electromagnetic radiation along said surface level;
and wherein during said step of controlling, said control device is controlling said energy density of said beam of electromagnetic radiation in said volume of said bath of powdered material by controlling at least one of:
- said dimension of said beam of electromagnetic radiation at said surface level;
- said power of said beam of electromagnetic radiation at said surface level;
- said thickness of said layer of said powdered material of said bath of powdered material; and
- said speed of moving said beam of electromagnetic radiation along said surface level

Preferably, said control device is arranged for controlling said dimension of said beam of electromagnetic radiation at said surface level by controlling at least one of:
- a focus setting of said beam of electromagnetic radiation;
- a beam shape of said beam of electromagnetic radiation;
- an expansion of said beam of electromagnetic radiation; and
wherein during said step of controlling said control device controls said dimension of said beam of electromagnetic radiation at said surface level by controlling at least one of:
- said focus setting of said beam of electromagnetic radiation;
- said beam shape of said beam of electromagnetic radiation;
- said expansion of said beam of electromagnetic radiation.

Preferably, said control device is arranged for controlling said power of said beam of electromagnetic radiation at said surface level by controlling at least one of:
- a duty cycle of said solidifying device;
- an output power of said solidifying device; and
wherein during said step of controlling said control device changes said power of said beam of electromagnetic radiation at said surface level by controlling at least one of:
- said duty cycle of said solidifying device;
- said output power of said solidifying device.

Preferably, said control device is further arranged for controlling a hatch distance at said surface level of said beam of electromagnetic radiation taking into account said dimension of said beam of electromagnetic radiation and wherein said control device controls said hatch distance at said surface level of said beam of electromagnetic radiation taking into account said dimension of said beam of electromagnetic radiation.

The apparatus and method according to the present disclosure will next be explained by means of the accompanying schematic figures. In the figures:
Fig. 1: shows a schematic overview of an apparatus according to the second aspect of the present disclosure;

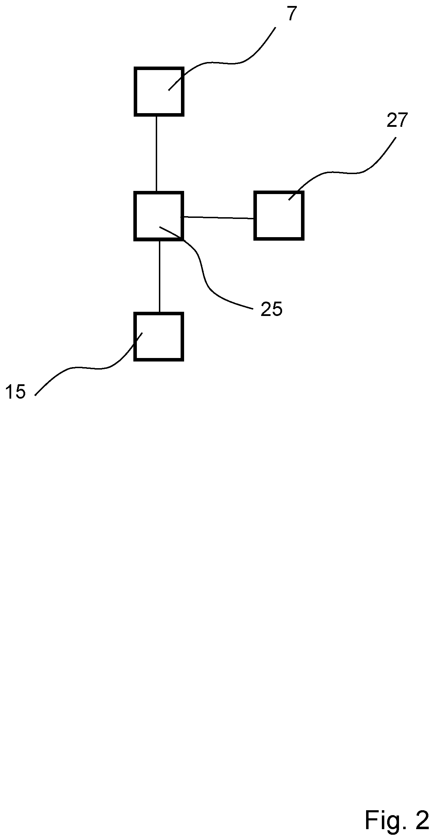

Fig. 2: shows elements of the apparatus from Fig. 1;

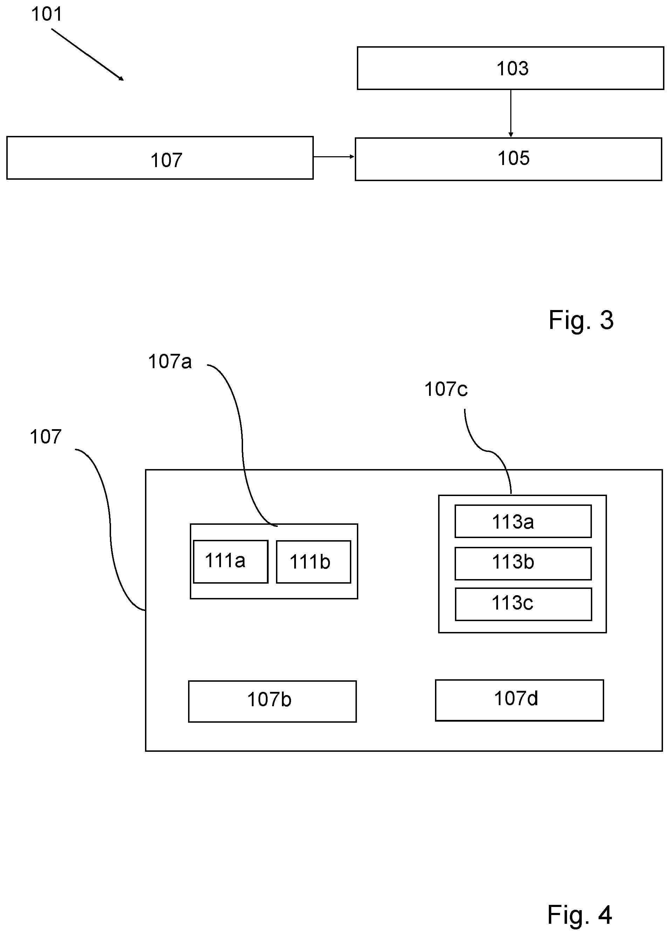

Fig. 3: shows a schematic overview of a method according to the second aspect of the present disclosure;
Fig. 4: shows elements of the method according to Fig. 3;
Fig. 5: shows a schematic overview of a further method according to the second aspect of the present disclosure;

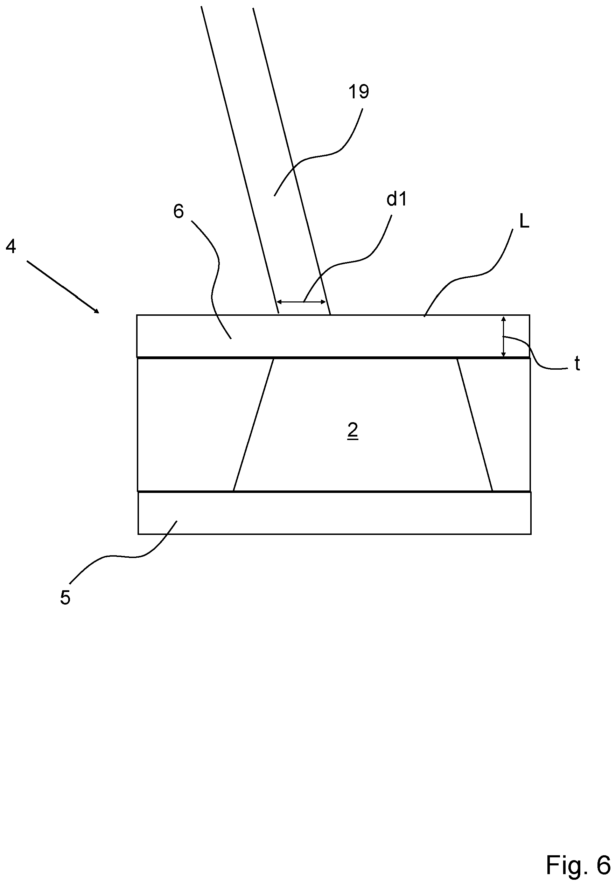

Fig. 6: shows a side view of a bath of powdered material in an apparatus according to the first aspect of the present disclosure;

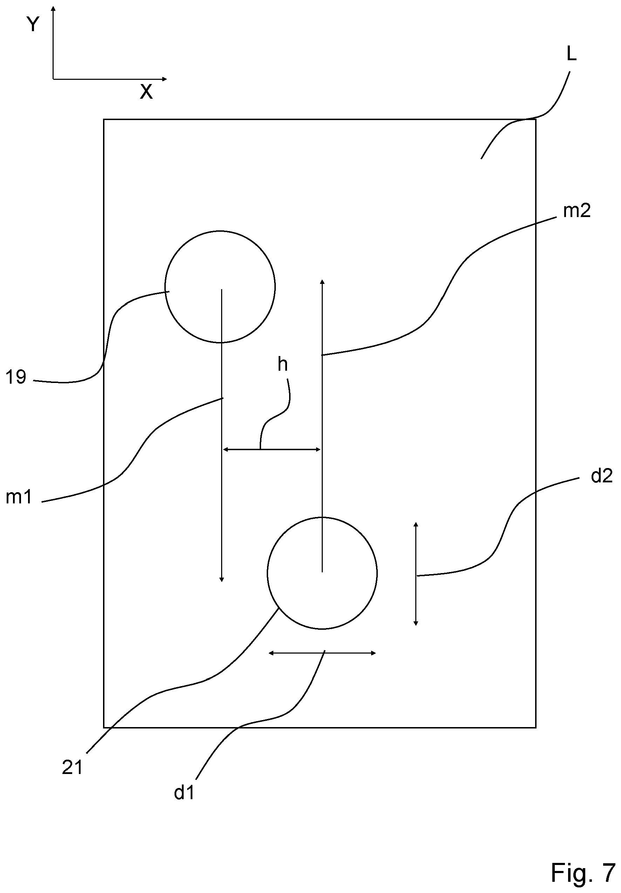

Fig. 7: shows a top view of the bath of powdered material from Fig. 6.

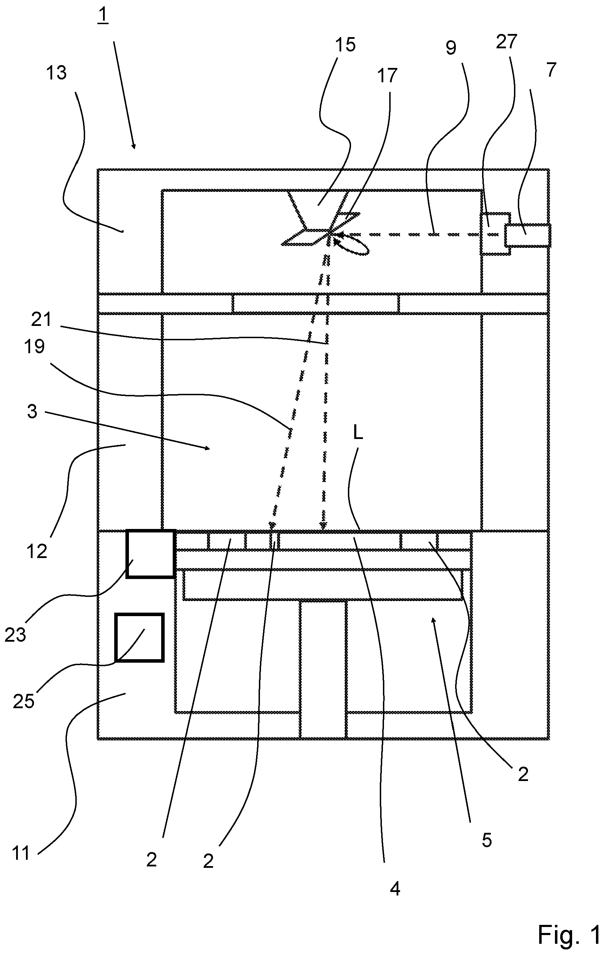

Figure 1 shows an overview of an apparatus 1 for producing an object 2 by means of additive manufacturing. The apparatus 1 is built from several frame parts 11, 12, 13. The apparatus comprises a process chamber 3 for receiving a bath of material 4 which can be solidified. The material of said bath of material 4 is provided from a supply container 23. In a lower frame part 11, a shaft is formed, wherein a support 5 is provided for positioning the object 2 (or even objects) in relation to the surface level L of the bath of material 4. The support 5 is movably provided in the shaft, such that after solidifying a part of a layer 6, the support 5 may be lowered, and a further layer of material may be applied and at least partly solidified on top of the part of the object 2 already formed. In a top part 13 of the apparatus 1, a solidifying device 7 is provided for solidifying a selective part of the material 4.

In the embodiment shown, the solidifying device 7 is a laser device, which is arranged for producing electromagnetic radiation in the form of laser light, in order to melt powdered material 4 provided on the support 5, which then, after cooling, forms a solidified part of the object 2 to be produced. However, the invention is not limited to the type of solidifying device. As can be seen, the electromagnetic radiation 9 emitted by the laser device 7 is deflected by means of a displacement unit comprising a deflector unit 15, which uses a rotatable optical element 17 to direct the emitted radiation 9 towards the surface L of the layer of material 4. Depending on the position of the deflector unit 15, radiation may be emitted, as an example, according to rays 19, 21.

Apparatus 1 further comprises a control device 25. Control device 25 is arranged for controlling an energy density of said electromagnetic radiation at said surface level L, , during solidification of said selective part of said layer 6 of said powdered material of said bath of powdered material 4, taking into account a position of said beam of electromagnetic radiation 19, 21 at said surface level L. The control device 25 is communicatively coupled to the solidifying device 7 and the deflector unit 15. The control device 25 may control the energy density at said surface level L by changing a duty cycle of the solidifying device 7 and/or by changing an output power of the solidifying device 7. Communicatively coupling the control device 25 to the deflector unit 15 allows for controlling the energy density by changing a speed of moving said beam of electromagnetic radiation 19, 21 along said surface level L and/or controlling the energy density by changing a hatch distance h at said surface level L of said beam of electromagnetic radiation 19, 21 taking into account a dimension d1, d2 of the beam of electromagnetic radiation 19, 21 at the surface level L. Dimension d1 corresponds to the size of the beam of electromagnetic radiation at the surface level L in a first direction X, and d2 correspond to the size of the beam of electromagnetic radiation at the surface level L in a second direction Y. The first direction X and the second direction Y are mutually perpendicular and directed parallel to the surface level L. During manufacturing of the object 2, the beam of electromagnetic radiation is moved along the surface level L for solidifying the part of the layer 6 for forming a layer part of object 2. Solidification of the part of layer 6 that forms a layer part of object 2 may be done by repeatedly moving said beam in direction m1 and subsequently in direction m2, wherein said beam is displaced in a direction perpendicular to m1 and/or m2 by the hatch distance h.

In addition, the control device 25 is communicatively coupled to beam shaping optics 27 for changing a focus setting and/or a dimension d1, d2 of the beam of electromagnetic radiation 19, 21 at the surface level L such that at a constant power of said beam of electromagnetic radiation said energy density of said electromagnetic radiation at said surface level L is maintained substantially constant, preferably constant, along said surface level L. The control device 25 is further arranged for moving the support 5 and thereby controlling a thickness t of the layer 6 of the powdered material of the bath of powdered material 4.

The control device 25 is arranged for controlling said energy density of said electromagnetic radiation at said surface level L taking into account said position of said beam of electromagnetic radiation 19, 21 at said surface level L while simultaneously controlling said energy density of said electromagnetic radiation in a volume of said bath of powdered material 4. The control device 25 takes into account said position of said beam of electromagnetic radiation 19, 21 at said surface level L for maintaining said energy density at said surface level L along said surface level within a range of 10 %, preferably within a range of 3% of a nominal energy density at said surface level and/or for maintaining the energy density of said electromagnetic radiation in the volume of the bath of powdered material 4 within a range of 10 %, preferably within a range of 3% of a nominal energy density in said volume of said bath of material.

Method 101 comprises a step 103 of receiving, in the process chamber 3, a bath of powdered material 4, wherein a surface level L of the bath of powdered material 4 defines an object working area. A subsequent step 105 of method 101 is solidifying, by solidifying device 7, a selective part of said layer 6 of said bath of powdered material 4 on said surface level L. A step 107 of controlling, by the control device 25, is performed during said step 105 of solidifying. During step 107 of controlling, the energy density of the beam of electromagnetic radiation 19, 21 is controlled taking into account a position of the beam of electromagnetic radiation 19, 21 at said surface level L. The step 107 of controlling during the step 105 of solidifying may comprise controlling 107a the power of the beam of electromagnetic radiation 19, 21 at said surface level L, controlling 107b a speed of moving the beam of electromagnetic radiation 19, 21 along the surface level L, controlling 107c a dimension d1, d2 of the beam of electromagnetic radiation 19, 21 at the surface level L and/or controlling 107d the hatch distance h at said surface level L of said beam of electromagnetic radiation 19, 21 for maintaining said energy density at said surface level L along said surface level within a range of 10 %, preferably within a range of 3% of a nominal energy density at said surface level and/or for maintaining the energy density of said electromagnetic radiation in the volume of the bath of powdered material 4 within a range of 10 %, preferably within a range of 3% of a nominal energy density in said volume of said bath of material.

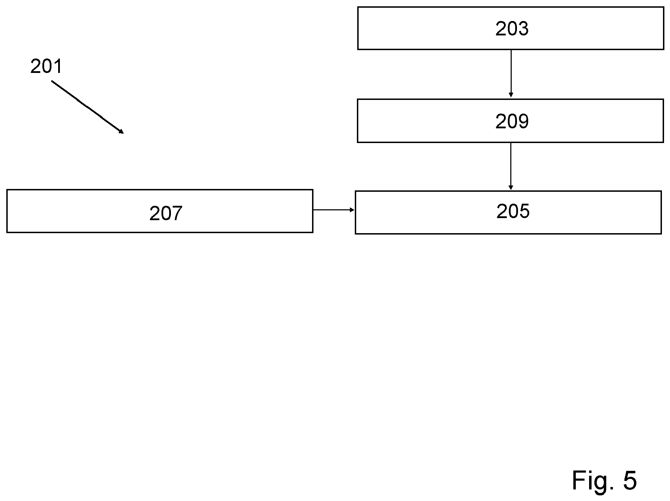

The step of controlling 107a the power of the beam of electromagnetic radiation may comprises a sub-step 111a of controlling a duty cycle of said solidifying device 7 and/or a sub-step 111b of controlling an output power of said solidifying device 7. The step of controlling 107 a dimension d1, d2 of the beam of electromagnetic radiation may comprise a sub-step 113a of controlling a focus setting of said beam of electromagnetic radiation, a sub-step 113b of controlling a beam shape of said beam of electromagnetic radiation and/or a sub-step 113c of controlling expansion of said beam of electromagnetic radiation. During said step 105 of solidifying, said beam of electromagnetic radiation may be moved along said surface level L as is shown in Fig. 5.

Method 201 differs mainly from method 101 in that said method further comprises the step 209 of applying a layer of said powdered material 4, wherein a thickness of said layer is controlled by said controlling device 25. Steps of method 201 that are similar to steps of method 101 are provided with a reference number equal to the reference number of the step in method 101 raised by 100.

## Claims

1. Apparatus (1) for producing an object (2) by means of additive manufacturing, said apparatus (1) comprising:
- a process chamber (3) for receiving a bath of powdered material (4) which can be solidified by exposure to electromagnetic radiation;
- a support (5) for positioning a part of said object (2) in relation to a surface level (L) of said bath of powdered material (4);
- a solidifying device (7) arranged for emitting a beam of electromagnetic radiation on said surface level (L) for solidifying a selective part of a layer (6) of said powdered material of said bath of powdered material (4); and
**characterised by** a control device (25) arranged for controlling an energy density of said beam of electromagnetic radiation at said surface level (L), by controlling a dimension (d1, d2) of said beam of electromagnetic radiation at said surface level (L), wherein said dimension (d1, d2) corresponds to the size of the beam of electromagnetic radiation at the surface level (L) in a first direction (X) and/or second direction (Y) that are mutually perpendicular and directed parallel to the surface level (L), during solidification of said selective part of said layer (6) of said powdered material of said bath of powdered material (4), taking into account a position of said beam of electromagnetic radiation at said surface level (L) such that at a constant power of said beam of electromagnetic radiation said energy density of said electromagnetic radiation at said surface level (L) is maintained within a range of 10%, 5%, 3% or 1% along said surface level (L), preferably such that at a constant power of said beam of electromagnetic radiation said energy density of said electromagnetic radiation at said surface level (L) is maintained constant along said surface level (L).

2. Apparatus (1) according to claim 1, wherein said control device (25) is arranged for controlling said energy density of said beam of electromagnetic radiation at said surface level (L) by controlling a power of said beam of electromagnetic radiation at said surface level (L).

3. Apparatus (1) according to claim 2, wherein said control device (25) is arranged for maintaining said energy density at said surface level (L) along said surface level (L) within a range of 3 % of a nominal energy density at said surface level (L), preferably wherein said control device (25) is arranged for maintaining said energy density at said surface level (L) constant along said surface level (L).

4. Apparatus (1) according to any one of the preceding claims, wherein said control device (25) is arranged for controlling said energy density of said electromagnetic radiation in a volume of said bath of powdered material (4), by controlling said dimension (d1, d2) of said beam of electromagnetic radiation, taking into account said position of said beam of electromagnetic radiation at said surface level (L) such that at said constant output power of said beam of electromagnetic radiation said energy density in said volume of said bath of powdered material (4) of said electromagnetic radiation is maintained substantially constant along said surface level (L), wherein said energy density at any position in said volume is larger than zero, preferably wherein said control device (25) is arranged for controlling said energy density of said beam of electromagnetic radiation in said volume of said bath of powdered material (4) by controlling at least one of:
- a thickness (t) of said layer (6) of said powdered material of said bath of powdered material (4); and
- a speed of moving said beam of electromagnetic radiation along said surface level (L).

5. Apparatus (1) according to any one of the preceding claims, wherein said control device (25) is arranged for controlling said dimension (d1, d2) of said beam of electromagnetic radiation at said surface level (L) by controlling at least one of:
- a focus setting of said beam of electromagnetic radiation;
- a beam shape of said beam of electromagnetic radiation;
- an expansion of said beam of electromagnetic radiation.

6. Apparatus (1) according to claim 2 or a dependent claim thereof, wherein said control device (25) is arranged for controlling said power of said beam of electromagnetic radiation at said surface level (L) by controlling at least one of:
- a duty cycle of said solidifying device (7);
- an output power of said solidifying device (7).

7. Apparatus (1) according to any one of the preceding claims, wherein said control device (25) is further arranged for controlling a hatch distance (h) at said surface level (L) of said beam of electromagnetic radiation taking into account said dimension (d1, d2) of said beam of electromagnetic radiation.

8. Method (101, 201) for producing an object (2) by means of additive manufacturing, wherein said method (101, 201) comprises the steps of:
- receiving (103, 203), in a process chamber (3), a bath of powdered material (4), wherein a surface level (L) of said bath of powdered material (4) defines an object working area;
- solidifying (105, 205), by a solidifying device (7) arranged for providing a beam of electromagnetic radiation, a selective part of a layer (6) of powdered material of said bath of powdered material (4) by means of said beam of electromagnetic radiation;
**characterised by** controlling (107, 207), by a control device (25), during said step of solidifying (105, 205), an energy density of said beam of electromagnetic radiation at said surface level (L), by controlling a dimension (d1, d2) of said beam of electromagnetic radiation at said surface level (L), wherein said dimension (d1, d2) corresponds to the size of the beam of electromagnetic radiation at the surface level (L) in a first direction (X) and/or second direction (Y) that are mutually perpendicular and directed parallel to the surface level (L), taking into account a position of said beam of electromagnetic radiation at said surface level (L) such that at a constant output power of said beam of electromagnetic radiation said energy density of said electromagnetic radiation at said surface level (L) is maintained within a range of 10%, 5%, 3% or 1% along said surface level (L), preferably such that at a constant power of said beam of electromagnetic radiation said energy density of said electromagnetic radiation at said surface level (L) is maintained constant along said surface level (L).

9. Method according to claim 8, wherein said control device is arranged for controlling said energy density of said beam of electromagnetic radiation at said surface level by changing a power of said beam of electromagnetic radiation at said surface level and wherein during said step of controlling, said control device changes said power of said beam of electromagnetic radiation at said surface level.

10. Method according to claim 8 or 9, wherein said control device is arranged for maintaining said energy density at said surface level constant along said surface level and wherein, during said step of controlling, said control device maintains said energy density at said surface level constant along said surface level.

11. Method according to any one of the claims 8 to 10, wherein said control device is arranged for controlling said energy density of said electromagnetic radiation in a volume of said bath of powdered material, by controlling said dimension (d1, d2) of said beam of electromagnetic radiation, taking into account said position of said beam of electromagnetic radiation at said surface level such that at said constant output power of said beam of electromagnetic radiation said energy density in said volume of said bath of powdered material (4) of said electromagnetic radiation is maintained substantially constant along said surface level (L), wherein said energy density at any position in said volume is larger than zero, and wherein during said step of controlling said control device is controlling said energy density of said electromagnetic radiation in said volume of said bath of powdered material, by controlling said dimension (d1, d2) of said beam of electromagnetic radiation, taking into account said position of said beam of electromagnetic radiation at said surface level such that at said constant output power of said beam of electromagnetic radiation said energy density in said volume of said bath of powdered material (4) of said electromagnetic radiation is maintained substantially constant along said surface level (L).

12. Method according to claim 11, wherein said control device is arranged for controlling said energy density of said beam of electromagnetic radiation in said volume of said bath of powdered material by controlling at least one of:
- a thickness of said layer of said powdered material; and
- a speed of moving said beam of electromagnetic radiation along said surface level;
and wherein during said step of controlling, said control device is controlling said energy density of said beam of electromagnetic radiation in said volume of said bath of powdered material by controlling at least one of:
- said thickness of said layer of said powdered material; and
- said speed of moving said beam of electromagnetic radiation along said surface level.

13. Method according to any one of the claims 8 to 12, wherein said control device is arranged for controlling said dimension of said beam of electromagnetic radiation at said surface level by controlling at least one of:
- a focus setting of said beam of electromagnetic radiation;
- a beam shape of said beam of electromagnetic radiation;
- an expansion of said beam of electromagnetic radiation; and
wherein during said step of controlling said control device controls said dimension of said beam of electromagnetic radiation at said surface level by controlling at least one of:
- said focus setting of said beam of electromagnetic radiation;
- said beam shape of said beam of electromagnetic radiation;
- said expansion of said beam of electromagnetic radiation.

14. Method according to any one of the claims 8 to 13, wherein said control device is arranged for controlling said power of said beam of electromagnetic radiation at said surface level by controlling at least one of:
- a duty cycle of said solidifying device;
- an output power of said solidifying device; and
wherein during said step of controlling said control device controls said power of said beam of electromagnetic radiation at said surface level by controlling at least one of:
- said duty cycle of said solidifying device;
- said output power of said solidifying device.

15. Method according to any one of the claims 8 to 14, wherein said control device is further arranged for controlling a hatch distance at said surface level of said beam of electromagnetic radiation taking into account said dimension of said beam of electromagnetic radiation and wherein said control device controls said hatch distance at said surface level of said beam of electromagnetic radiation taking into account said dimension of said beam of electromagnetic radiation.

## Patentansprüche

1. Vorrichtung (1) zum Herstellen eines Objekts (2) mittels additiver Fertigung, die Vorrichtung (1) Folgendes umfassend:
- eine Prozesskammer (3) zum Aufnehmen eines Bades aus pulverisiertem Material (4), das durch Kontakt mit elektromagnetischer Strahlung verfestigt werden kann;
- einen Träger (5) zum Positionieren eines Teils des Objekts (2) in Relation zu einem Oberflächenniveau (L) des Bades aus dem pulverisierten Material (4);
- eine Verfestigungseinrichtung (7), die zum Emittieren eines Strahls elektromagnetischer Strahlung auf das Oberflächenniveau (L) zum Verfestigen eines selektiven Teils einer Schicht (6) des pulverisierten Materials des Bades aus dem pulverisierten Material (4) eingerichtet ist; und
**dadurch gekennzeichnet, dass**
eine Steuereinrichtung (25), die zum Steuern einer Energiedichte des Strahls elektromagnetischer Strahlung auf dem Oberflächenniveau (L) eingerichtet ist, indem eine Abmessung (d1, d2) des Strahls elektromagnetischer Strahlung auf dem Oberflächenniveau (L) gesteuert wird, wobei die Abmessung (d1, d2) der Größe des Strahls elektromagnetischer Strahlung auf dem Oberflächenniveau (L) in einer ersten Richtung (X) und/oder in einer zweiten Richtung (Y) entspricht, die zueinander senkrecht sind und parallel zum Oberflächenniveau (L) gerichtet sind, beim Verfestigen des selektiven Teils der Schicht (6) des pulverisierten Materials des Bades aus pulverisiertem Material (4) unter Berücksichtigung einer Position des Strahls elektromagnetischer Strahlung auf dem Oberflächenniveau (L), so dass bei einer konstanten Leistung des Strahls elektromagnetischer Strahlung die Energiedichte der elektromagnetischen Strahlung auf dem Oberflächenniveau (L) in einem Bereich von 10 %, 5 %, 3 % oder 1 % entlang des Oberflächenniveaus (L) gehalten wird, vorzugsweise so, dass bei einer konstanten Leistung des Strahls elektromagnetischer Strahlung die Energiedichte der elektromagnetischen Strahlung auf dem Oberflächenniveau (L) entlang des Oberflächenniveaus (L) konstant gehalten wird.

2. Vorrichtung (1) nach Anspruch 1, wobei die Steuereinrichtung (25) zum Steuern der Energiedichte des Strahls elektromagnetischer Strahlung auf dem Oberflächenniveau (L) durch Steuern einer Leistung des Strahls elektromagnetischer Strahlung auf dem Oberflächenniveau (L) eingerichtet ist.

3. Vorrichtung (1) nach Anspruch 2, wobei die Steuereinrichtung (25) zum Halten der Energiedichte auf dem Oberflächenniveau (L) entlang des Oberflächenniveaus (L) in einem Bereich von 3 % einer nominalen Energiedichte auf dem Oberflächenniveau (L) eingerichtet ist, wobei die Steuereinrichtung (25) vorzugsweise zum konstant Halten der Energiedichte auf dem Oberflächenniveau (L) entlang des Oberflächenniveaus (L) eingerichtet ist.

4. Vorrichtung (1) nach einem der vorhergehenden Ansprüche, wobei die Steuereinrichtung (25) zum Steuern der Energiedichte der elektromagnetischen Strahlung in einem Volumen des Bades aus pulverisiertem Material (4) eingerichtet ist, indem die Abmessung (d1, d2) des Strahls elektromagnetischer Strahlung unter Berücksichtigung der Position des Strahls elektromagnetischer Strahlung auf dem Oberflächenniveau (L) so gesteuert wird, dass bei der konstanten Ausgangsleistung des Strahls elektromagnetischer Strahlung die Energiedichte der elektromagnetischen Strahlung in dem Volumen des Bades aus pulverisiertem Material (4) entlang des Oberflächenniveaus (L) im Wesentlichen konstant gehalten wird, wobei die Energiedichte an einer beliebigen Position in dem Volumen größer ist als Null, wobei die Steuereinrichtung (25) vorzugsweise zum Steuern der Energiedichte des Strahls elektromagnetischer Strahlung in dem Volumen des Bades aus pulverisiertem Material (4) eingerichtet ist, indem mindestens eines des Folgenden gesteuert wird:
- eine Dicke (t) der Schicht (6) des pulverisierten Materials des Bades aus pulverisiertem Material (4); und
- eine Geschwindigkeit des Bewegens des Strahls elektromagnetischer Strahlung entlang des Oberflächenniveaus (L).

5. Vorrichtung (1) nach einem der vorhergehenden Ansprüche, wobei die Steuereinrichtung (25) zum Steuern der Abmessung (d1, d2) des Strahls elektromagnetischer Strahlung auf dem Oberflächenniveau (L) durch Steuern mindestens eines des Folgenden eingerichtet ist:
- einer Fokuseinstellung des Strahls elektromagnetischer Strahlung;
- einer Strahlform des Strahls elektromagnetischer Strahlung;
- einer Ausdehnung des Strahls elektromagnetischer Strahlung.

6. Vorrichtung (1) nach Anspruch 2 oder einem abhängigen Anspruch davon, wobei die Steuereinrichtung (25) zum Steuern der Leistung des Strahls elektromagnetischer Strahlung auf dem Oberflächenniveau (L) durch Steuern mindestens eines des Folgenden eingerichtet ist:
- eines Arbeitszyklus der Verfestigungseinrichtung (7);
- einer Ausgangsleistung der Verfestigungseinrichtung (7).

7. Vorrichtung (1) nach einem der vorhergehenden Ansprüche, wobei die Steuereinrichtung (25) weiterhin zum Steuern eines Bahnabstands (h) auf dem Oberflächenniveau (L) des Strahls elektromagnetischer Strahlung unter Berücksichtigung der Abmessung (d1, d2) des Strahls elektromagnetischer Strahlung eingerichtet ist.

8. Verfahren (101, 201) zum Herstellen eines Objekts (2) mittels additiver Fertigung, wobei das Verfahren (101, 201) die folgenden Schritte umfasst:
- Aufnehmen (103, 203) eines Bades aus pulverförmigem Material (4) in einer Prozesskammer (3), wobei ein Oberflächenniveau (L) des Bades aus pulverförmigem Material (4) einen Objektbearbeitungsbereich definiert;
- Verfestigen (105, 205) eines selektiven Teils einer Schicht (6) aus pulverisiertem Material des Bades aus pulverisiertem Material (4) durch eine Verfestigungseinrichtung (7), die zum Bereitstellen eines Strahls elektromagnetischer Strahlung eingerichtet ist, mittels des Strahls elektromagnetischer Strahlung;
**dadurch gekennzeichnet, dass**
Steuern (107, 207), durch eine Steuereinrichtung (25), während des Schritts des Verfestigens (105, 205), einer Energiedichte des Strahls elektromagnetischer Strahlung auf dem Oberflächenniveau (L), indem eine Abmessung (d1, d2) des Strahls elektromagnetischer Strahlung auf dem Oberflächenniveau (L) gesteuert wird, wobei die Abmessung (d1, d2) der Größe des Strahls elektromagnetischer Strahlung auf dem Oberflächenniveau (L) in einer ersten Richtung (X) und/oder einer zweiten Richtung (Y) entspricht, die zueinander senkrecht sind und parallel zum Oberflächenniveau (L) gerichtet sind, unter Berücksichtigung einer Position des Strahls elektromagnetischer Strahlung auf dem Oberflächenniveau (L), so dass bei einer konstanten Ausgangsleistung des Strahls elektromagnetischer Strahlung die Energiedichte der elektromagnetischen Strahlung auf dem Oberflächenniveau (L) in einem Bereich von 10 %, 5 %, 3 % oder 1 % entlang des Oberflächenniveaus (L) gehalten wird, vorzugsweise so, dass bei einer konstanten Leistung des Strahls elektromagnetischer Strahlung die Energiedichte der elektromagnetischen Strahlung auf dem Oberflächenniveau (L) entlang des Oberflächenniveaus (L) konstant gehalten wird.

9. Verfahren nach Anspruch 8, wobei die Steuereinrichtung zum Steuern der Energiedichte des Strahls elektromagnetischer Strahlung auf dem Oberflächenniveau durch Ändern einer Leistung des Strahls elektromagnetischer Strahlung auf dem Oberflächenniveau eingerichtet ist und wobei die Steuereinrichtung während des Schritts des Steuerns die Leistung des Strahls elektromagnetischer Strahlung auf dem Oberflächenniveau ändert.

10. Verfahren nach Anspruch 8 oder 9, wobei die Steuereinrichtung zum konstant Halten der Energiedichte auf dem Oberflächenniveau entlang des Oberflächenniveaus eingerichtet ist und wobei die Steuereinrichtung während des Schritts des Steuerns die Energiedichte auf dem Oberflächenniveau entlang des Oberflächenniveaus konstant hält.

11. Verfahren nach einem der Ansprüche 8 bis 10, wobei die Steuereinrichtung zum Steuern der Energiedichte der elektromagnetischen Strahlung in einem Volumen des Bades aus pulverisiertem Material eingerichtet ist, indem die Abmessung (d1, d2) des Strahls elektromagnetischer Strahlung unter Berücksichtigung der Position des Strahls elektromagnetischer Strahlung auf dem Oberflächenniveau so gesteuert wird, dass bei der konstanten Ausgangsleistung des Strahls elektromagnetischer Strahlung die Energiedichte in dem Volumen des Bades aus pulverisiertem Material (4) der elektromagnetischen Strahlung entlang des Oberflächenniveaus (L) im Wesentlichen konstant gehalten wird, wobei die Energiedichte an einer beliebigen Position in dem Volumen größer ist als Null und wobei die Steuereinrichtung während des Schritts des Steuerns die Energiedichte der elektromagnetischen Strahlung in dem Volumen des Bades aus pulverisiertem Material steuert, indem die Abmessung (d1, d2) des Strahls elektromagnetischer Strahlung unter Berücksichtigung der Position des Strahls elektromagnetischer Strahlung auf dem Oberflächenniveau so gesteuert wird, dass bei der konstanten Ausgangsleistung des Strahls elektromagnetischer Strahlung die Energiedichte der elektromagnetischen Strahlung in dem Volumen des Bades aus pulverisiertem Material (4) entlang des Oberflächenniveaus (L) im Wesentlichen konstant gehalten wird.

12. Verfahren nach Anspruch 11, wobei die Steuereinrichtung zum Steuern der Energiedichte des Strahls elektromagnetischer Strahlung in dem Volumen des Bades aus pulverisiertem Material durch Steuern mindestens eines des Folgenden eingerichtet ist:
- einer Dicke der Schicht des pulverisierten Materials; und
- einer Geschwindigkeit des Bewegens des Strahls elektromagnetischer Strahlung entlang des Oberflächenniveaus;
und wobei während des Schritts des Steuerns die Steuereinrichtung die Energiedichte des Strahls elektromagnetischer Strahlung in dem Volumen des Bades aus pulverisiertem Material durch Steuern mindestens eines des Folgenden steuert:
- der Dicke der Schicht des pulverisierten Materials; und
- der Geschwindigkeit des Bewegens des Strahls elektromagnetischer Strahlung entlang des Oberflächenniveaus.

13. Verfahren nach einem der Ansprüche 8 bis 12, wobei die Steuereinrichtung zum Steuern der Abmessung des Strahls elektromagnetischer Strahlung auf dem Oberflächenniveau durch Steuern mindestens eines des Folgenden eingerichtet ist:
- einer Fokuseinstellung des Strahls elektromagnetischer Strahlung;
- einer Strahlform des Strahls elektromagnetischer Strahlung;
- einer Ausdehnung des Strahls elektromagnetischer Strahlung; und
wobei während des Schritts des Steuerns die Steuereinrichtung die Abmessung des Strahls elektromagnetischer Strahlung auf dem Oberflächenniveau durch Steuern mindestens eines des Folgenden steuert:
- der Fokuseinstellung des Strahls elektromagnetischer Strahlung;
- der Strahlform des Strahls elektromagnetischer Strahlung;
- der Ausdehnung des Strahls elektromagnetischer Strahlung.

14. Verfahren nach einem der Ansprüche 8 bis 13, wobei die Steuereinrichtung zum Steuern der Leistung des Strahls elektromagnetischer Strahlung auf dem Oberflächenniveau durch Steuern mindestens eines des Folgenden eingerichtet ist:
- eines Arbeitszyklus der Verfestigungseinrichtung;
- einer Ausgangsleistung der Verfestigungseinrichtung; und
wobei während des Schritts des Steuerns die Steuereinrichtung die Leistung des Strahls elektromagnetischer Strahlung auf dem Oberflächenniveau durch Steuern mindestens eines des Folgenden steuert:
- des Arbeitszyklus der Verfestigungseinrichtung;
- der Ausgangsleistung der Verfestigungseinrichtung.

15. Verfahren nach einem der Ansprüche 8 bis 14, wobei die Steuereinrichtung weiterhin zum Steuern eines Bahnabstands auf dem Oberflächenniveau des Strahls elektromagnetischer Strahlung unter Berücksichtigung der Abmessung des Strahls elektromagnetischer Strahlung eingerichtet ist und wobei die Steuereinrichtung den Bahnabstand auf dem Oberflächenniveau des Strahls elektromagnetischer Strahlung unter Berücksichtigung der Abmessung des Strahls elektromagnetischer Strahlung steuert.

## Revendications

1. Appareil (1) de production d'un objet (2) au moyen de la fabrication additive, ledit appareil (1) comprenant :
- une chambre de traitement (3) pour recevoir un bain de matériau pulvérulent (4) qui peut être solidifié par exposition à un rayonnement électromagnétique ;
- un support (5) pour positionner une partie dudit objet (2) par rapport à un niveau de surface (L) dudit bain de matériau pulvérulent (4) ;
- un dispositif de solidification (7) agencé pour émettre un faisceau de rayonnement électromagnétique sur ledit niveau de surface (L) pour solidifier une partie sélective d'une couche (6) dudit matériau pulvérulent dudit bain de matériau pulvérulent (4) ; et
**caractérisé par**
un dispositif de commande (25) agencé pour commander une densité d'énergie dudit faisceau de rayonnement électromagnétique audit niveau de surface (L), en commandant une dimension (d1, d2) dudit faisceau de rayonnement électromagnétique audit niveau de surface (L), dans lequel ladite dimension (d1, d2) correspond à la taille du faisceau de rayonnement électromagnétique au niveau de surface (L) dans une première direction (X) et/ou une seconde direction (Y) qui sont mutuellement perpendiculaires et dirigées parallèlement au niveau de surface (L), pendant la solidification de ladite partie sélective de ladite couche (6) dudit matériau pulvérulent dudit bain de matériau pulvérulent (4), en tenant en compte d'une position dudit faisceau de rayonnement électromagnétique audit niveau de surface (L) de sorte qu'à puissance constante dudit faisceau de rayonnement électromagnétique, ladite densité d'énergie dudit rayonnement électromagnétique audit niveau de surface (L) est maintenue dans une plage de 10%, 5%, 3% ou 1% le long dudit niveau de surface (L), de préférence de sorte qu'à puissance constante dudit faisceau de rayonnement électromagnétique ladite densité d'énergie dudit rayonnement électromagnétique audit niveau de surface (L) est maintenue constante le long dudit niveau de surface (L).

2. Appareil (1) selon la revendication 1, dans lequel ledit dispositif de commande (25) est agencé pour commander ladite densité d'énergie dudit faisceau de rayonnement électromagnétique audit niveau de surface (L) en commandant une puissance dudit faisceau de rayonnement électromagnétique audit niveau de surface (L).

3. Appareil (1) selon la revendication 2, dans lequel ledit dispositif de commande (25) est agencé pour maintenir ladite densité d'énergie audit niveau de surface (L) le long dudit niveau de surface (L) dans une plage de 3% d'une densité d'énergie nominale audit niveau de surface (L), de préférence dans lequel ledit dispositif de commande (25) est agencé pour maintenir ladite densité d'énergie audit niveau de surface (L) constante le long dudit niveau de surface (L).

4. Appareil (1) selon l'une quelconque des revendications précédentes, dans lequel ledit dispositif de commande (25) est agencé pour commander ladite densité d'énergie dudit rayonnement électromagnétique dans un volume dudit bain de matériau pulvérulent (4), en commandant ladite dimension (d1, d2) dudit faisceau de rayonnement électromagnétique, en tenant compte de ladite position dudit faisceau de rayonnement électromagnétique audit niveau de surface (L) de sorte qu'à ladite puissance de sortie constante dudit faisceau de rayonnement électromagnétique ladite densité d'énergie dans ledit volume dudit bain de matériau pulvérulent (4) dudit rayonnement électromagnétique est maintenue sensiblement constante le long dudit niveau de surface (L), dans lequel ladite densité d'énergie à toute position dans ledit volume est supérieure à zéro, de préférence dans lequel ledit dispositif de commande (25) est agencé pour commander ladite densité d'énergie dudit faisceau de rayonnement électromagnétique dans ledit volume dudit bain de matériau pulvérulent (4) en commandant au moins l'une parmi :
- une épaisseur (t) de ladite couche (6) dudit matériau pulvérulent dudit bain de matériau pulvérulent (4) ; et
- une vitesse de déplacement dudit faisceau de rayonnement électromagnétique le long dudit niveau de surface (L).

5. Appareil (1) selon l'une quelconque des revendications précédentes, dans lequel ledit dispositif de commande (25) est agencé pour commander ladite dimension (d1, d2) dudit faisceau de rayonnement électromagnétique audit niveau de surface (L) en commandant au moins l'un parmi :
- un réglage de focalisation dudit faisceau de rayonnement électromagnétique ;
- une forme de faisceau dudit faisceau de rayonnement électromagnétique ;
- une expansion dudit faisceau de rayonnement électromagnétique.

6. Appareil (1) selon la revendication 2 ou une revendication qui dépend de celle-ci, dans lequel ledit dispositif de commande (25) est agencé pour commander ladite puissance dudit faisceau de rayonnement électromagnétique audit niveau de surface (L) en commandant au moins l'un parmi :
- un cycle de service dudit dispositif de solidification (7) ;
- une puissance de sortie dudit dispositif de solidification (7).

7. Appareil (1) selon l'une quelconque des revendications précédentes, dans lequel ledit dispositif de commande (25) est en outre agencé pour commander une distance de hachure (h) audit niveau de surface (L) dudit faisceau de rayonnement électromagnétique en tenant compte de ladite dimension (d1, d2) dudit faisceau de rayonnement électromagnétique.

8. Procédé (101, 201) de production d'un objet (2) au moyen de fabrication additive, dans lequel ledit procédé (101, 201) comprend les étapes de :
- recevoir (103, 203), dans une chambre de traitement (3), un bain de matériau pulvérulent (4), où un niveau de surface (L) dudit bain de matériau pulvérulent (4) définit une zone de travail d'objet ;
- solidifier (105, 205), par un dispositif de solidification (7) agencé pour fournir un faisceau de rayonnement électromagnétique, une partie sélective d'une couche (6) de matériau pulvérulent dudit bain de matériau pulvérulent (4) au moyen dudit faisceau de rayonnement électromagnétique ;
**caractérisé par**
commander (107, 207), par un dispositif de commande (25), pendant ladite étape de solidification (105, 205), une densité d'énergie dudit faisceau de rayonnement électromagnétique audit niveau de surface (L), en commandant une dimension (d1, d2) dudit faisceau de rayonnement électromagnétique audit niveau de surface (L), où ladite dimension (d1, d2) correspond à la taille du faisceau de rayonnement électromagnétique au niveau de surface (L) dans une première direction (X) et/ou une seconde direction (Y) qui sont mutuellement perpendiculaires et dirigées parallèlement au niveau de surface (L), en tenant compte d'une position dudit faisceau de rayonnement électromagnétique audit niveau de surface (L) de sorte qu'à puissance de sortie constante dudit faisceau de rayonnement électromagnétique, ladite densité d'énergie dudit rayonnement électromagnétique audit niveau de surface (L) est maintenue dans une plage de 10%, 5%, 3% ou 1% le long dudit niveau de surface (L), de préférence de sorte qu'à puissance constante dudit faisceau de rayonnement électromagnétique ladite densité d'énergie dudit rayonnement électromagnétique audit niveau de surface (L) est maintenue constante le long dudit niveau de surface (L).

9. Procédé selon la revendication 8, dans lequel ledit dispositif de commande est agencé pour commander ladite densité d'énergie dudit faisceau de rayonnement électromagnétique audit niveau de surface en modifiant une puissance dudit faisceau de rayonnement électromagnétique audit niveau de surface et dans lequel pendant ladite étape de commande, ledit dispositif de commande modifie ladite puissance dudit faisceau de rayonnement électromagnétique audit niveau de surface.

10. Procédé selon la revendication 8 ou 9, dans lequel ledit dispositif de commande est agencé pour maintenir ladite densité d'énergie audit niveau de surface constante le long dudit niveau de surface et dans lequel, pendant ladite étape de commande, ledit dispositif de commande maintient ladite densité d'énergie audit niveau de surface constante le long dudit niveau de surface.

11. Procédé selon l'une quelconque des revendications 8 à 10, dans lequel ledit dispositif de commande est agencé pour commander ladite densité d'énergie dudit rayonnement électromagnétique dans un volume dudit bain de matériau pulvérulent, en commandant ladite dimension (d1, d2) dudit faisceau de rayonnement électromagnétique, en tenant compte de ladite position dudit faisceau de rayonnement électromagnétique audit niveau de surface de sorte qu'à ladite puissance de sortie constante dudit faisceau de rayonnement électromagnétique ladite densité d'énergie dans ledit volume dudit bain de matériau pulvérulent (4) dudit rayonnement électromagnétique est maintenue sensiblement constante le long dudit niveau de surface (L), dans lequel ladite densité d'énergie à toute position dans ledit volume est supérieure à zéro, et dans lequel pendant ladite étape de commande ledit dispositif de commande commande ladite densité d'énergie dudit rayonnement électromagnétique dans ledit volume dudit bain de matériau pulvérulent, en commandant ladite dimension (d1, d2) dudit faisceau de rayonnement électromagnétique, en tenant compte de ladite position dudit faisceau de rayonnement électromagnétique audit niveau de surface de sorte qu'à ladite puissance de sortie constante dudit faisceau de rayonnement électromagnétique ladite densité d'énergie dans ledit volume dudit bain de matériau pulvérulent (4) dudit rayonnement électromagnétique est maintenue sensiblement constante le long dudit niveau de surface (L).

12. Procédé selon la revendication 11, dans lequel ledit dispositif de commande est agencé pour commander ladite densité d'énergie dudit faisceau de rayonnement électromagnétique dans ledit volume dudit bain de matériau pulvérulent en commandant au moins l'une parmi :
- une épaisseur de ladite couche dudit matériau pulvérulent ; et
- une vitesse de déplacement dudit faisceau de rayonnement électromagnétique le long dudit niveau de surface ;
et dans lequel pendant ladite étape de commande, ledit dispositif de commande commande ladite densité d'énergie dudit faisceau de rayonnement électromagnétique dans ledit volume dudit bain de matériau pulvérulent en commandant au moins l'une parmi :
- ladite épaisseur de ladite couche dudit matériau pulvérulent ; et
- ladite vitesse de déplacement dudit faisceau de rayonnement électromagnétique le long dudit niveau de surface.

13. Procédé selon l'une quelconque des revendications 8 à 12, dans lequel ledit dispositif de commande est agencé pour commander ladite dimension dudit faisceau de rayonnement électromagnétique audit niveau de surface en commandant au moins l'un parmi :
- un réglage de focalisation dudit faisceau de rayonnement électromagnétique ;
- une forme de faisceau dudit faisceau de rayonnement électromagnétique ;
- une expansion dudit faisceau de rayonnement électromagnétique ; et
dans lequel pendant ladite étape de commande ledit dispositif de commande commande ladite dimension dudit faisceau de rayonnement électromagnétique audit niveau de surface en commandant au moins l'un parmi :
- ledit réglage de focalisation dudit faisceau de rayonnement électromagnétique ;
- ladite forme de faisceau dudit faisceau de rayonnement électromagnétique ;
- ladite expansion dudit faisceau de rayonnement électromagnétique.

14. Procédé selon l'une quelconque des revendications 8 à 13, dans lequel ledit dispositif de commande est agencé pour commander ladite puissance dudit faisceau de rayonnement électromagnétique audit niveau de surface en commandant au moins l'un parmi :
- un cycle de service dudit dispositif de solidification ;
- une puissance de sortie dudit dispositif de solidification ; et
dans lequel pendant ladite étape de commande, ledit dispositif de commande commande ladite puissance dudit faisceau de rayonnement électromagnétique audit niveau de surface en commandant au moins l'un parmi :
- ledit cycle de service dudit dispositif de solidification ;
- ladite puissance de sortie dudit dispositif de solidification.

15. Procédé selon l'une quelconque des revendications 8 à 14, dans lequel ledit dispositif de commande est en outre agencé pour commander une distance de hachure audit niveau de surface dudit faisceau de rayonnement électromagnétique en tenant compte de ladite dimension dudit faisceau de rayonnement électromagnétique et dans lequel ledit dispositif de commande commande ladite distance de hachure audit niveau de surface dudit faisceau de rayonnement électromagnétique en tenant compte de ladite dimension dudit faisceau de rayonnement électromagnétique.
